# EUROPEAN PATENT SPECIFICATION

(11) **EP 1 708 598 B1**
(45) Date of publication and mention of the grant of the patent: **15.08.2007**
(21) Application number: 04806248.3
(22) Date of filing: 24.12.2004
(51) Int. Cl.: A47J 19/02, A47J 43/046

(54) **JUICING REAMER**
SAFTREIBE
PRESSE-AGRUMES

(30) Priority: 27.01.2004 GB 0401665
(43) Date of publication of application: 11.10.2006
(73) Proprietor: Kenwood Limited, Havant, Hampshire PO9 2NH (GB)
(72) Inventor: Goodrick-Meech, Christina, c/o Kenwood Limited, Havant, Hampshire PO9 2NH (GB)
(74) Representative: Marsh, Robin Geoffrey
(86) International application number: PCT/GB2004/005454
(87) International publication number: WO 2005/070270

(56) References cited:
- EP-A- 1 051 939
- DE-B- 1 084 457
- DE-C- 895 256
- GB-A- 790 872
- GB-A- 2 374 522

## Description

This invention relates to a juicing reamer, and more particularly to a hand-held reamer which is intended to be twisted in relation to a cut piece of fruit, for example citrus fruit, whilst applying pressure between the reamer and the fruit, thereby to extract juice from the fruit.

Such reamers are well known, and usually comprise a generally tubular portion, configured to sit comfortably in the hand of a user, attached to or integrally formed with a ribbed extension portion that is shaped to engage efficiently with the fruit when pressed into contact therewith and twisted relative thereto by the user.

It is common to utilise reamers of the kind described above in conjunction with electrically powered kitchen appliances, such as blenders (including those appliances currently marketed as "smoothie makers" and described, for example, in EP-1390133-A1), processors and/or mixers, when the ingredients being blended, processed or mixed in a suitable receptacle forming part of the appliance require, or would benefit from, the addition of juice. Frequently, the receptacles of such appliances are provided with a lid or cover that is apertured to receive a small cup-like vessel, or so-called "filler cap" which is removable from the aperture to permit the addition of ingredients to the materials being processed or otherwise treated in the receptacle whilst the main part of the lid remains in place. Typically the filler cap bears markings that can be used to measure quantities of ingredients to be added to the receptacle through the aperture in the lid when the filler cap has been removed therefrom. Typically also, the filler cap is made of transparent plastics material, such as polycarbonate, and is shaped and configured to seal the aperture in the lid when replaced therein and secured, for example by screw or bayonet fixtures.

In other appliances, such as the aforementioned smoothie makers, the lid or cover of the receptacle is, as described in the aforementioned EP-1390133-A1, to which reference is invited, formed with a central aperture through which a stirring rod can be introduced to provide extra agitation to the ingredients and/or to assist in expelling the relatively thick liquids produced by such appliances through a valved tap at the base of the receptacle. In some such appliances, the upwardly-facing outer surface of the lid or cover is formed, around the aforementioned aperture, with a concave dished region which accommodates a ball-like formation on the shaft of the stirring rod and co-operates therewith to permit the stick to be moved around within the receptacle to agitate or otherwise stimulate motion of the ingredient mixture whilst retaining a sufficient closure of the lid against egress of the mixture through the aperture in the lid.

In either event it will be appreciated that there is provided a component that is essential to or closely associated with the operation of the appliance and which is relatively expensive to fabricate, bearing in mind the close tolerances needed to adequately seal the aperture in the lid so as to prevent the expulsion of liquidised or pulped ingredients from the receptacle when the appliance is powered.

It is an object of this invention to configure the component so that it is rendered capable of additional usage, separately from the appliance, and thus affords significantly better value for money. The invention also aims to provide extra convenience for a user operating the powered kitchen appliance, by providing a juicing component that is ready to hand, as it comprises a component that is usable as a juicing reamer when removed from the appliance, but also fulfils a useful role when attached thereto. This avoids the need for the user to locate and subsequently clean a manual juicing reamer that is stored separately from the appliance.

It is known, for example from DE-B-1261289, for the bowl of a mixing appliance to be provided with a lid which has a juicing reamer upstanding therefrom, and which is intended to be rotated, along with the lid and a bowl to which it is attached. A halved fruit can be pressed down on the reamer during rotation, and the lid is formed with slit-like apertures through which juice extracted from the fruit can enter the bowl.

The known device, however, does not meet the objectives of the invention, since the lid with the upstanding reamer is not conveniently usable for any purpose separately from the appliance. Moreover, the specially formed lid with the upstanding reamer and slit-like apertures either replaces the conventional lid, in which case it has no other purpose, or is provided in addition to a conventional lid, which increases cost.

It is further known, from DE 10 84 457 B, to provide a receptacle of a mixing appliance with an apertured lid having a conical outflow tube facing into the receptacle. A stopper extends into the aperture and the tube and is provided, on its outwardly facing surface, with a citrus pressing head intended for use, in-situ on the receptacle, for juice extraction; the juice flowing into the receptacle through channels formed between the stopper and the conical outflow tube. Again, this device has only a single intended function.

According to the invention there is provided a cap in or for a powered kitchen appliance, the kitchen appliance having:
(a) a receptacle for ingredients;
(b) a lid or cover for said receptacle having an aperture formed therein through which ingredients may be introduced into said receptacle; and
(c) means disposed to blend, mix or otherwise process said ingredients in said receptacle;
the cap being characterised in that it is constructed as being removably securable in the aperture of said lid, and in that it comprises a first hollowed portion for holding ingredients therein, and a second portion shaped and configured for use, when removed from said aperture, as a reamer for the manual extraction of juice from fruit or vegetable produce.

By means of the invention, the aforementioned objectives of economic advantage and user convenience are addressed with elegance and simplicity.

Preferably, the portion of said cap that is shaped and/or configured for use as a reamer for the manual extraction of juice is provided with a plurality of ribs outstanding from an outer surface thereof and, further preferably, the ribs conform to a symmetrical pattern. There may be, for example, six or eight such ribs, although any desired number of ribs can be used.

In a preferred embodiment of the invention, said cap is generally tubular in shape, and said ribs run substantially longitudinally thereof.

The ribs may be substantially continuous throughout their respective lengths, or at least one of said ribs may be discontinuous along its length. In this latter event, neighbouring ribs may be formed with discontinuities misaligned in a direction circumferential of said cap.

The ribs may be integrally formed with the cap or carried by a shell member attachable, for example by means of adhesive or mechanically (such as by screw threads) to an outer surface of said cap.

It is preferred that the cap comprises a hollowed portion provided with capacity markings for the measurement of ingredients therein, and/or that the cap is constructed at least in part of transparent or translucent plastics material such as polycarbonate.

In a further preferred embodiment, the said second portion of the cap tapers towards an extremity thereof, and the ribs converge at or near the tapered extremity.

Further preferably the cap is generally tubular in shape, with a longitudinal axis intended to generally align with that of a receptacle associated with the kitchen appliance. In such circumstances, it is preferred that the ribs extend substantially parallel to said longitudinal axis.

The invention further comprises an electrically powered kitchen appliance having associated therewith a receptacle for ingredients to be blended, mixed or otherwise processed therein; the receptacle having a lid formed with an aperture in which is removably insertable a cap in accordance with any of the foregoing aspects or examples of the invention.

In order that the invention may be clearly understood and readily carried into effect, one embodiment thereof will now be described, by way of example only, with reference to the accompanying drawings, of which:
Figure 1 shows, in side elevation, a kitchen appliance comprising a blender in accordance with one example of the invention;
Figure 2 shows the blender of Figure 1 in perspective view from above and to one side, thereby to illustrate more clearly the location of a filler cap thereon;
Figures 3 and 4 show plan and perspective views respectively of a filler cap in accordance with one example of the invention; and
Figure 5 shows a stirring rod and reamer combination.

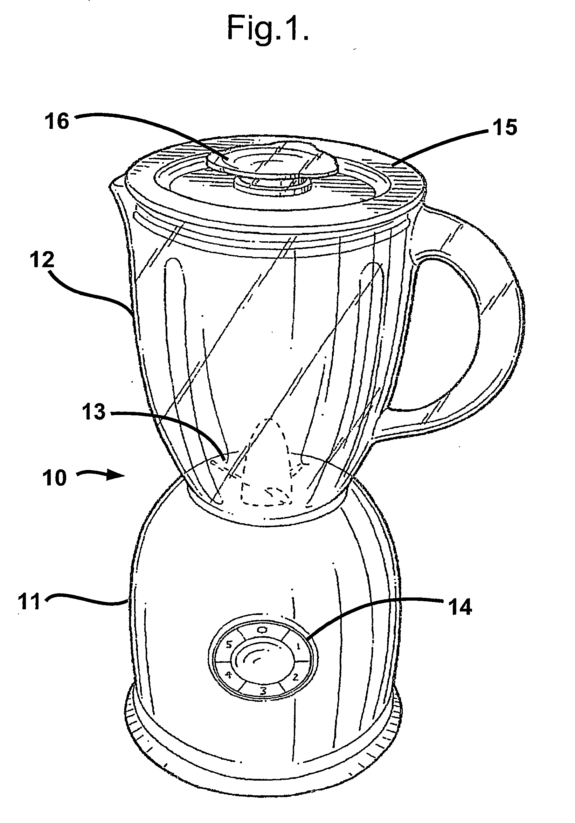

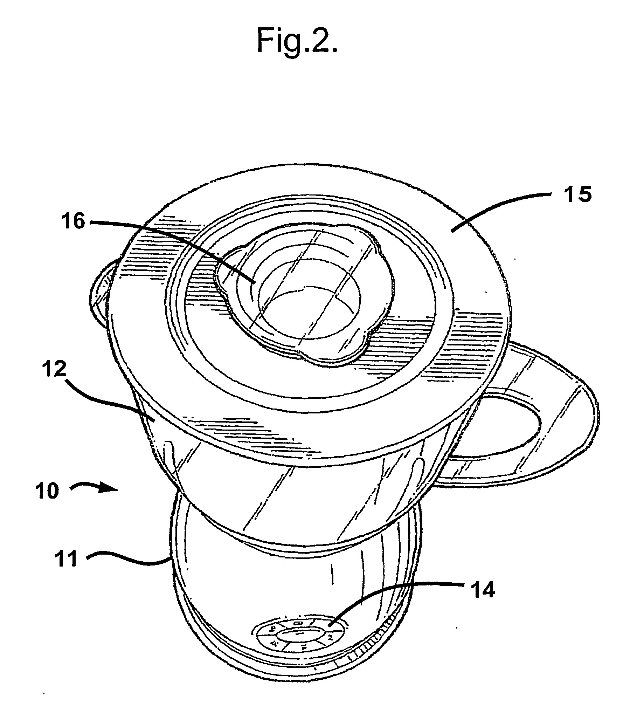

Referring now to the drawings, Figures 1 and 2 show a blender which may usefully incorporate the invention although, as mentioned previously, the invention is applicable to any electrically powered kitchen appliance of this general nature, such as a processor or a mixer.

The blender of Figures 1 and 2 is generally shown at 10 and comprises a base unit 11 housing an electric motor (not shown) and a receptacle 12, mounted atop the base unit 11, in which ingredients such as foods, sauces and liquids can be blended by the action of blades such as 13 which are rotated by the motor. The receptacle 12 is demountable from the base unit 11 and contains at its base, as is conventional, components which couple with a shaft, driven by the motor and exposed at the top of the base unit 11, to convey the motor drive to the blades 13.

Mounted on the side of the base unit 11, again as is conventional, is a motor controller 14, by means of which the speed of operation and/or the mode of operation (e.g. continuous or pulsed) of the motor can be selected by a user of the appliance 10.

The top of the receptacle 12 is closable by means of a lid or cover 15 which is configured and constructed to provide a good seal to the upper lip of the receptacle 12, thereby to ensure that the ingredients subject to blending in the receptacle 12 are not expelled from the appliance 10 during the blending process.

Disposed centrally of the lid 15 and removeable therefrom is a filler cap 16 which, when inserted as shown into the remainder of the lid 15, is also configured and constructed to provide adequate sealing against unwanted egress of the materials being blended in the receptacle 12. The filler cap 16 is typically formed of plastics material and is usefully transparent or translucent, and made of rigid material such as polycarbonate. The filler cap 16 can conveniently bear capacity markings, such as volume markings indicating several different volume measurements so that selected amounts of material can be added as ingredients to be blended by measuring them in the filler cap and using the filler cap to pour them into the receptacle 12 through the aperture in the lid 15 created by the removal of the filler cap 16 therefrom.

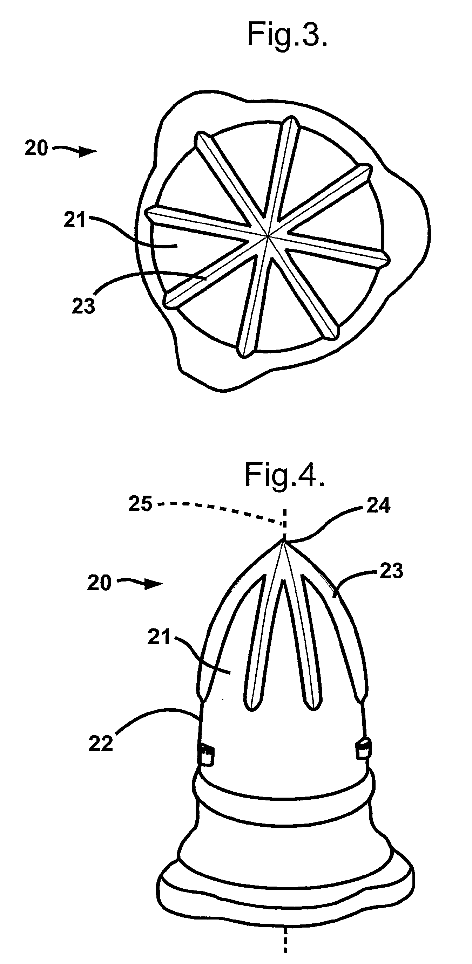

Figures 3 and 4 show a filler cap 20 in accordance with one example of the invention. A portion 21 of the outer surface 22 of the cap 20 is extended and tapered, and formed or otherwise provided with a plurality of ribs 23. In this example, there are eight ribs 23 distributed in symmetrical fashion around the portion 21 of the surface 22 and, because of the taper, the ribs converge towards one another at or near that end 24 of the filler cap 20 which, when the cap 20 is fitted into the lid 15 instead of the cap 16 of Figures 1 and 2, protrudes into the receptacle 12.

In use, the filler cap 20 is deployed and generally employed in the same manner as a conventional cap 16. However, the provision of the ribs 23 permits the filler cap 20 to be additionally usable as a reamer to facilitate the manual extraction of juice from produce such as vegetables and fruits. If desired, the juicing operation may be carried out directly above the aperture in the lid 15 left by the removal of the filler cap 20 therefrom, so that juices can be added directly to the ingredients in the receptacle. If preferred, of course, the juice can be caught in another container and later poured into the receptacle 12.

It will be appreciated that the filler cap 20, like the conventional filler cap 16, is generally tubular in shape, and has a longitudinal axis 25 which is intended to coincide with the longitudinal axis of the receptacle 12; and therefore with the axis of the drive shaft of the motor that is housed in the base unit 11 of the appliance 10. The ribs 23 therefore run generally axially of the filler cap 20, but adopt a progressively more radial component as they approach the end 24.

The ribs 23 can exhibit any desired profile and dimensions to achieve a reaming action conducive to efficient juice extraction, and may also exhibit aesthetic and/or functional design features. In one example, the ribs 23 are continuously formed along their respective lengths. In another example, the ribs 23 are broken, or castellated, with breaks in neighbouring ribs either aligned or misaligned, depending upon the efficiency of the reaming action with any particular rib profile. One or more of the ribs 23 may, moreover, be dished, slanted or inclined so as to present a generally convex or concave engaging surface with the produce being juiced, depending upon the direction in which the reamer is twisted by the user. Alternatively or additionally, the edges of one or more of the ribs 23 may be serrated or scalloped to form teeth designed to enhance the reaming action.

The ribs 23 are preferably integrally formed with the filler cap 20, such as by moulding or pressing. If preferred, however, the ribs 23 can be formed on a separate shell portion which is attachable to a pre-formed filler cap, for example by adhesive or by mechanical attachment means, such as screw threading.

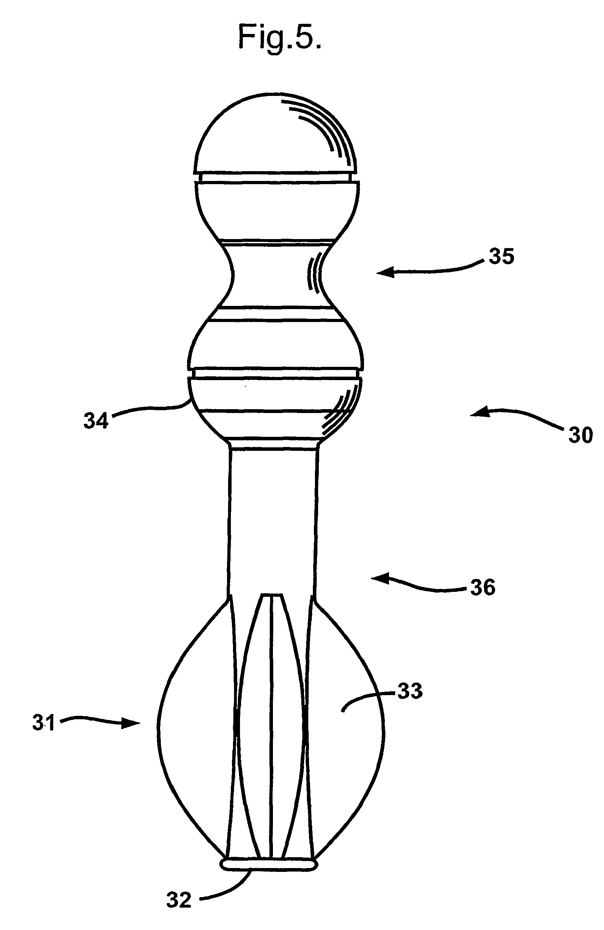

Another useful reamer configuration, shown in Figure 5 but not claimed herein, comprises a stirring rod 30 for an electrically powered kitchen appliance comprising a so-called smoothie-maker. In this embodiment, a region 31 at and adjacent the base 32 of the rod (i.e. that portion of the rod 30 which, in use, protrudes farthest into the receptacle) is shaped, for example to form a bulbous portion which incorporates outstanding ribs 33 or other gouging members, to create a reamer that can be used as described hereinbefore to manually extract juice from produce such as fruit and vegetables.

The shaping and configuration applied to the region 31 at and adjacent the base 32 of the stirring rod 30 may also, if desired, be designed with an additional objective of improving the capability of the rod to interact with the ingredients processed in the smoothie maker. Moreover, the shape, attitude and general configuration of the ribs 33 or other gouging members may be modified in any or all of the ways described above in relation to the ribs 23 of the filler cap 20, in order to achieve a desired reaming performance and/or aesthetic appearance.

In use of the rod 30 for stirring in a smoothie maker, a ball portion 34 is arranged, in known manner and as described in the aforementioned EP-1390133-A1, to interact with a suitable socket-like configuration formed on the upper part of the lid of the receptacle about a slot in the lid through which the rod 30 is inserted. Utilising the ball-like portion 34 and the socket-like configuration formed in the lid, the rod 30 is rocked or pivoted to enable the lower end 31 to be used for stirring the smoothie mix created in the receptacle.

It will be appreciated that, in order to permit the rod 30 to be readily inserted through the slot in the lid of the receptacle, the rod may be made in two parts, such as 35 and 36; the parts being separable at a location, predetermined during manufacture of the rod, and disposed at any convenient position along the rod between the base of the ball-like portion 34 and the top of the region 31. The two parts 35 and 36 are, of course, reconnectable after installation, for example by screwing them together, or by any other convenient attachment technique.

## Claims

1. A cap (20) for a powered kitchen appliance, the kitchen appliance having:
(a) a receptacle (12) for ingredients;
(b) a lid or cover (15) for said receptacle having an aperture formed therein through which ingredients may be introduced into said receptacle (12); and
(c) means disposed to blend, mix or otherwise process said ingredients in said receptacle;
the cap (20) being **characterised in that** it is constructed as being removably securable in the aperture of said lid (15), and **in that** it comprises a first hollowed portion for holding ingredients therein, and a second portion (21) shaped and configured for use, when removed from said aperture, as a reamer for the manual extraction of juice from fruit or vegetable produce.

2. A cap (20) according to claim 1 bearing a plurality of ribs (23) outstanding from an outer surface (22) of the said second portion (21) thereof.

3. A cap (20) according to claim 2, wherein the said second portion (21) tapers towards an extremity (24) thereof, and the said ribs (23) converge at or near the tapered extremity.

4. A cap (20) according to claim 2 or claim 3 wherein the ribs (23) conform to a symmetrical pattern.

5. A cap (20) according to any of claims 2 to 4 conforming to a generally tubular shape, wherein said ribs (23) run substantially longitudinally along said second portion (21) thereof.

6. A cap (20) according to any of claims 2 to 5 wherein all of said ribs (23) are substantially continuous throughout their respective lengths.

7. A cap (20) according to any of claims 2 to 5 wherein at least one of said ribs (23) is discontinuous along its length.

8. A cap (20) according to claim 7 wherein neighbouring ribs (23) are formed with discontinuities misaligned in a direction circumferential of said cap (20).

9. A cap (20) according to any of claims 2 to 8 wherein said second portion (21) and said ribs (23) are integrally formed with said first portion.

10. A cap (20) according to any of claims 2 to 8 wherein said second portion (21) and said ribs (23) comprise a shell member attachable to said first portion.

11. A cap (20) according to any of claims 2 to 10 wherein at least one of said ribs (23) is dished, slanted or inclined so as to present a generally convex or concave engaging surface with the produce being juiced, depending upon the direction in which the second portion (21) of said cap, constituting said reamer, is twisted relative to the produce from which juice is to be extracted.

12. A cap (20) according to any of claims 2 to 11 wherein an edge of at least one of said ribs (23) is serrated or scalloped to form teeth to enhance the reaming action.

13. A cap (20) according to any preceding claim wherein the first portion of said cap (20) bears capacity markings for the measurement of ingredients therein.

14. A cap (20) according to any preceding claim constructed at least in part of transparent or translucent plastics material such as polycarbonate.

15. A powered kitchen appliance having:
(a) a receptacle (12) for ingredients;
(b) a lid or cover (15) for said receptacle having an aperture formed therein through which ingredients may be introduced into said receptacle (12);
(c) means disposed to blend, mix or otherwise process said ingredients in said receptacle; and
(d) a cap (20) according to any preceding claim for temporary insertion into the aperture of said lid or cover (15).

## Patentansprüche

1. Eine Kappe (20) für eine angetriebene Küchenmaschine, wobei die Küchenmaschine folgende Teile aufweist:
(a) einen Behälter (12) für Zutaten;
(b) einen Deckel oder eine Abdeckung (15) für den besagten Behälter mit einer in dieser ausgebildeten Öffnung, durch die sich Zutaten in den besagten Behälter (12) geben lassen; und
(c) Mittel zum Vermengen, Mischen oder Verarbeiten von Zutaten in besagtem Behälter auf sonstige Art und Weise;
wobei die Kappe (20) **dadurch gekennzeichnet ist, dass** sie so ausgeführt ist, dass sie abnehmbar in der Öffnung des besagten Deckels (15) gesichert werden kann, und dass sie einen ersten, ausgehöhlten Teil für die Aufnahme von Zutaten aufweist, sowie einen zweiten Teil (21), der so ausgebildet und konfiguriert ist, dass er nach dem Entfernen aus der besagten Öffnung als Reiber für die manuelle Entsaftung von Früchten oder Gemüse verwendet werden kann.

2. Eine Kappe (20) gemäß Anspruch 1 mit einer Vielzahl von Rippen (23), die von einer Außenfläche (22) des besagten zweiten Teils (21) abstehen.

3. Eine Kappe (20) gemäß Anspruch 2, bei der sich der besagte zweite Teil (21) zu seinem einem Ende (24) hin verjüngt und die besagten Rippen (23) an oder in der Nähe des kegeligen Endes konvergieren.

4. Eine Kappe (20) gemäß Anspruch 2 oder Anspruch 3, bei dem die Rippen (23) in einem symmetrischen Muster angeordnet sind.

5. Eine Kappe (20) gemäß einem beliebigen der Ansprüche 2 bis 4, die im Wesentlichen rohrförmig ausgebildet ist, wobei die besagten Rippen (23) im Wesentlichen in Längsrichtung an dem besagten zweiten Teil (21) entlang verlaufen.

6. Eine Kappe (20) gemäß einem beliebigen der Ansprüche 2 bis 5, bei dem, alle der besagten Rippen (23) im Wesentlichen über ihre jeweilige Länge durchgehend ausgeführt sind.

7. Eine Kappe (20) gemäß einem beliebigen der Ansprüche 2 bis 5, bei dem wenigstens eine der besagten Rippen (23) über ihre Länge diskontinuierlich verläuft.

8. Eine Kappe (20) gemäß Anspruch 7, bei dem einander benachbarte Rippen (23) mit in einer Umfangsrichtung der besagten Kappe (20) versetzt angeordneten Unterbrechungen ausgeführt sind.

9. Eine Kappe (20) gemäß einem beliebigen der Ansprüche 2 bis 8, bei der der besagte zweite Teil (21) und die besagten Rippen (23) integrierend mit dem besagten ersten Teil ausgeführt sind.

10. Eine Kappe (20) gemäß einem beliebigen der Ansprüche 2 bis 8, bei dem der besagte zweite Teil (21) und die besagten Rippen (23) ein Schalenstück aufweisen, das an dem besagten ersten Teil angebracht werden kann.

11. Eine Kappe (20) gemäß einem beliebigen der Ansprüche 2 bis 10, bei der wenigstens eine der besagten Rippen (23) einwärts gekrümmt, schräg verlaufend oder geneigt ausgeführt ist, so dass in Abhängigkeit von der Drehrichtung des zweiten Teils (21) der besagten, den besagten Reiber bildenden Kappe gegenüber dem zu entsaftenden Produkt eine im Wesentlichen konvexe oder konkave Eingriffsfläche mit dem Produkt erhalten wird, das entsaftet werden soll.

12. Eine Kappe (20) gemäß einem beliebigen der Ansprüche 2 bis 11, bei der eine Kante wenigstens einer der besagten Rippen (23) verzahnt oder rattenzahnartig ausgebildet ist, um die Reibwirkung zu steigern.

13. Eine Kappe (20) gemäß einem beliebigen der vorhergehenden Ansprüche, bei dem der erste Teil der besagten Kappe (20) Kapazitätsmarkierungen zum Messen der in ihr enthaltenden Zutatenmenge aufweist.

14. Eine Kappe (20) gemäß einem beliebigen der vorhergehenden Ansprüche, die wenigstens teilweise aus durchsichtigem oder durchscheinendem Kunststoff wie z. B. Polykarbonat hergestellt ist.

15. Angetriebene Küchenmaschine, die folgende Teile aufweist:
(a) einen Behälter (12) für Zutaten;
(b) einen Deckel oder eine Abdeckung (15) für den besagten Behälter mit einer in dieser ausgebildeten Öffnung, durch die sich Zutaten in den besagten Behälter (12) geben lassen; und
(c) Mittel zum Vermengen, Mischen oder Verarbeiten von Zutaten in besagtem Behälter auf sonstige Art und Weise; und
(d) eine Kappe (20) gemäß einem der vorhergehenden Ansprüche für die zeitweilige Einführung in die Öffnung des besagten Deckels bzw. der besagten Abdeckung (15).

## Revendications

1. Bouchon (20) pour un appareil de cuisine électrique, l'appareil de cuisine ayant :
(a) un récipient (12) pour des ingrédients ;
(b) un couvercle ou un chapeau (15) pour ledit récipient ayant une ouverture formée dans celui-ci au travers de laquelle des ingrédients peuvent être introduits dans ledit récipient (12) ; et
(c) des moyens disposés pour mélanger, mixer ou autrement transformer lesdits ingrédients dans ledit récipient ;
le bouchon (20) étant **caractérisé en ce qu'**il est construit comme pouvant être assujetti de manière amovible dans l'ouverture dudit couvercle (15), et **en ce qu'**il comporte une première portion creuse destinée à tenir les ingrédients à l'intérieur de celle-ci, et une deuxième portion (21) formée et configurée à des fins d'utilisation, lorsqu'elle est retirée de ladite ouverture, en tant que presse-agrumes pour l'extraction manuelle de jus de produits de type fruits ou légumes.

2. Bouchon (20) selon la revendication 1, portant une pluralité de nervures (23) en saillie en provenance d'une surface extérieure (22) de ladite deuxième portion (21) de celui-ci.

3. Bouchon (20) selon la revendication 2, dans lequel ladite deuxième portion (21) va en s'effilant vers une extrémité (24) de celle-ci, et lesdites nervures (23) convergent au niveau de l'extrémité effilée ou à proximité de celle-ci.

4. Bouchon (20) selon la revendication 2 ou la revendication 3, dans lequel les nervures (23) sont conformes à un profil symétrique.

5. Bouchon (20) selon l'une quelconque des revendications 2 à 4 conformes à une forme généralement tubulaire, dans lequel lesdites nervures (23) se prolongent dans une large mesure de manière longitudinale le long de ladite deuxième portion (21) de celui-ci.

6. Bouchon (20) selon l'une quelconque des revendications 2 à 5, dans lequel toutes lesdites nervures (23) sont dans une large mesure continues sur l'ensemble de leurs longueurs respectives.

7. Bouchon (20) selon l'une quelconque des revendications 2 à 5, dans lequel au moins une desdites nervures (23) peut être discontinue sur sa longueur.

8. Bouchon (20) selon la revendication 7, dans lequel les nervures voisines (23) sont formées avec des discontinuités décalées dans une direction circonférentielle dudit bouchon (20).

9. Bouchon (20) selon l'une quelconque des revendications 2 à 8, dans lequel ladite deuxième portion (21) et lesdites nervures (23) sont formées de manière intégrale avec ladite première portion.

10. Bouchon (20) selon l'une quelconque des revendications 2 à 8, dans lequel ladite deuxième portion (21) et lesdites nervures (23) comportent un organe de type enveloppe pouvant être attaché sur ladite première portion.

11. Bouchon (20) selon l'une quelconque des revendications 2 à 10, dans lequel au moins une desdites nervures (23) est bombée, penchée ou inclinée de telle manière à présenter une surface de contact généralement convexe ou concave par rapport aux produits dont le jus est extrait, en fonction de la direction dans laquelle la deuxième portion (21) dudit bouchon, constituant ledit presse-agrumes, est tournée par rapport au produit dont le jus doit être extrait.

12. Bouchon (20) selon l'une quelconque des revendications 2 à 11, dans lequel un bord d'au moins une desdites nervures (23) est strié ou cannelé pour former des dents pour perfectionner l'action de pressage.

13. Bouchon (20) selon l'une quelconque des revendications précédentes, dans lequel la première portion dudit bouchon (20) porte des marquages de capacité pour la mesure des ingrédients à l'intérieur de celle-ci.

14. Bouchon (20) selon l'une quelconque des revendications précédentes, réalisé au moins en partie d'une matière plastique transparente ou translucide telle que du polycarbonate.

15. Appareil de cuisine électrique ayant :
(a) un récipient (12) pour des ingrédients ;
(b) un couvercle ou un chapeau (15) pour ledit récipient ayant une ouverture formée dans celui-ci au travers de laquelle des ingrédients peuvent être introduits dans ledit récipient (12) ;
(c) des moyens disposés pour mélanger, mixer ou autrement transformer lesdits ingrédients dans ledit récipient ; et
(d) un bouchon (20) selon l'une quelconque des revendications précédentes à des fins d'insertion temporaire dans l'ouverture dudit couvercle ou chapeau (15).
